# EUROPEAN PATENT SPECIFICATION

(11) **EP 2 705 311 B1**
(45) Date of publication and mention of the grant of the patent: **12.06.2019**
(21) Application number: 12779344.6
(22) Date of filing: 13.04.2012
(51) Int. Cl.: F25B 49/02, F25B 30/02, F25B 41/04, F25B 13/00

(54) **HEAT PUMP CONTROL**
WÄRMEPUMPENSTEUERUNG
COMMANDE DE POMPE À CHALEUR

(30) Priority: 05.05.2011 US 201113101521
(43) Date of publication of application: 12.03.2014
(73) Proprietor: Emerson Electric Co., St. Louis, MO 63136 (US)
(72) Inventor: RUIZ, Randy, T., St Louis MO 63136 (US)
(74) Representative: AWA Sweden AB
(86) International application number: PCT/US2012/033558
(87) International publication number: WO 2012/151037

(56) References cited:
- JP-A- 2007 225 250
- US-A- 4 211 089
- US-A- 4 211 089
- US-A- 4 301 660
- US-A- 4 301 660
- US-A- 5 042 264
- US-A- 5 319 943

## Description

### FIELD

The present disclosure relates to climate control systems for providing conditioned air to a space, and more specifically to control of a heat pump system utilizing a reversing valve.

### BACKGROUND

This section provides background information related to the present disclosure which is not necessarily prior art.

It is well known to use cycle reversing valves to control the operation of heat pumps. These valves, often referred to as "four way valves" or "reversing valves", are used to reverse the refrigerant line connections to a compressor, such that the heat pump can either pump heat into or out from a building (*e.g*., a house).

Cycle reversing valves for use in heat pumps typically are provided with an actuation means such as a solenoid coil for switching the valve to reverse the refrigerant line connections to the compressor. But where failure of the actuation means occurs in switching the reversing valve between heat and cool mode, ineffective compressor operation may result from a reversing valve mode that is inconsistent with heat pump operation. Known reversing valve controls do not sufficiently address the failure that may occur by a reversing valve in a heat pump US4211089 discloses a control for a heat pump according to the preamble of claim 1.

US4211089 discloses a control system for a reverse cycle refrigeration system. The control system in US4211089 comprises two separate temperature sensing means, namely an outdoor air temperature sensing means and an outdoor heat exchanger coil temperature sensing means.

### SUMMARY

This section provides a general summary of the disclosure, and is not a comprehensive disclosure of its full scope or all of its features.

Various embodiments of a control are provided for a heat pump having a reversing valve that is switchable between a heat mode and a cool mode corresponding to heating operation and cooling operation of the heat pump. A control for a heat pump according to the invention is defined by claim 1. One embodiment of a control includes a sensor that provides an output indicative of a sensed temperature of a condenser coil of the heat pump, and a controller for controlling activation of at least a compressor of the heat pump. The controller is configured to compare the output of the sensor to a representation of sensed ambient temperature to determine whether the reversing valve is in heat mode where the sensed ambient temperature exceeds the sensed temperature of the condenser coil, or in cool mode where the sensed ambient temperature is less than the sensed temperature of the condenser coil. The controller is further configured to deactivate at least the compressor of the heat pump when the reversing valve is determined to be in a mode that is inconsistent with the heat pump's heating operation or cooling operation.

In some embodiments of the present disclosure, the control includes a first sensor that provides an output indicative of a sensed temperature of a condenser coil of the heat pump, and a second sensor that provides an output indicative of an ambient temperature of air adjacent the condenser coil. The control includes a controller for controlling activation of at least a compressor of the heat pump. The controller is configured to compare the outputs of the first and second sensors to determine whether the reversing valve is in heat mode where the sensed ambient temperature exceeds the sensed temperature of the condenser coil, or in cool mode where the sensed ambient temperature is less than the sensed temperature of the condenser coil. The controller is further configured to deactivate at least the compressor of the heat pump when the reversing valve is determined to be in a mode that is inconsistent with the heating operation or cooling operation of the heat pump.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Fig.1 is a cut away view of a space showing an exemplary embodiment of a control system for a heat pump unit in accordance with the principles of the present disclosure;
Fig. 2 is a schematic of an exemplary embodiment of a control for a heat pump unit in accordance with the principles of the present disclosure.

Corresponding reference numerals indicate corresponding parts throughout the several views of the drawings.

### DETAILED DESCRIPTION

Example embodiments will now be described more fully with reference to the accompanying drawings.

According to one aspect of the present disclosure, various embodiments of a control are provided for a heat pump having a reversing valve that is switchable between a heat mode and a cool mode corresponding to heating operation and cooling operation of the heat pump. The control includes a sensor that provides an output indicative of a sensed temperature of a condenser coil of the heat pump, and a controller for controlling activation of at least a compressor of the heat pump. The controller is configured to compare the output of the sensor to a representation of sensed ambient temperature to determine whether the reversing valve is in heat mode where the sensed ambient temperature exceeds the sensed temperature of the condenser coil, or in cool mode where the sensed ambient temperature is less than the sensed temperature of the condenser coil. The controller is further configured to deactivate at least the compressor of the heat pump when the reversing valve is determined to be in a mode that is inconsistent with the heat pump's heating operation or cooling operation.

In some embodiments of the present disclosure, the control includes a first sensor that provides an output indicative of a sensed temperature of a condenser coil of the heat pump, and a second sensor that provides an output indicative of an ambient temperature of air adjacent the condenser coil. The control includes a controller for controlling activation of at least a compressor of the heat pump. The controller is configured to compare the outputs of the first and second sensors to determine whether the reversing valve is in heat mode where the sensed ambient temperature exceeds the sensed temperature of the condenser coil, or in cool mode where the sensed ambient temperature is less than the sensed temperature of the condenser coil. The controller is further configured to deactivate at least the compressor of the heat pump when the reversing valve is determined to be in a mode that is inconsistent with the heating operation or cooling operation of the heat pump, as explained below.

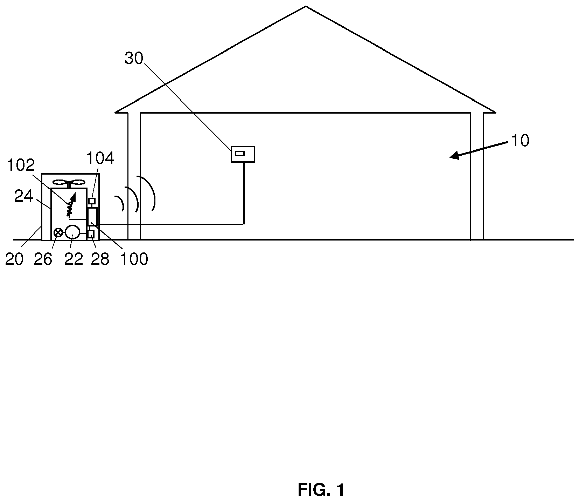

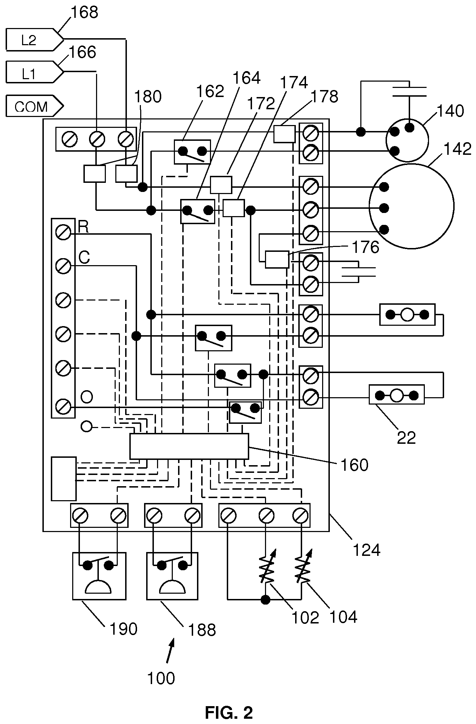

Referring to FIG. 1, a residential climate control system for a space 10 is shown that utilizes a heat pump 20 having a reversing valve 26 that is switchable between a heat mode and a cool mode corresponding to heating operation and cooling operation of the heat pump 20. The heat pump 20 (or alternatively an outdoor condenser unit) includes at least a condenser coil 24, a compressor 22 and a condenser fan. The heat pump 20 may comprise a switch or contactor 28 that switches alternating current to a motor (see 142 in FIG. 2) for the compressor 22 of the heat pump 20. A control 100 activates the contactor 28 and the compressor 22 in response to an activation signal from a thermostat 30. The thermostat 30 senses temperature within the space 10 and responsively sends an activation signal to the control 100 to initiate operation of at least the compressor 22 of the heat pump 20.

As shown in FIG. 1, the control 100 includes a sensor 102 that provides an output indicative of a sensed temperature of a condenser coil 24 of the heat pump 20. The control 100 may further include a second sensor 104 that provides an output indicative of an ambient temperature of air adjacent the condenser coil 24. The control 100 includes a controller (*e.g*., controller 160 shown in FIG. 2) for controlling activation of at least the compressor 22 of the heat pump 20. The controller 160 is configured to compare the output of the sensor 102 to a representation of sensed ambient temperature to determine whether the reversing valve 26 is in heat mode where the sensed ambient temperature exceeds the sensed temperature of the condenser coil 24, or in cool mode where the sensed ambient temperature is less than the sensed temperature of the condenser coil 24. The control 100 may, for example, be associated with or incorporated in a defrost controller. Alternatively, the control 100 may be a unitary control that is configured to directly connect an alternating current voltage source to the compressor 22, as explained below.

Referring to FIG. 2, a schematic of one embodiment of a control 100 is shown. The control 100 may be powered via a 24 volt alternating current power source connected at R and C, which may supply a half wave regulated 5 volt power supply (not shown) comprising a diode in series with a transistor and a regulating capacitor and zener diode for gating the transistor. The power supply may also be a small transformer and zener diode circuit. The control 100 preferably comprises a controller 160, which may be a microprocessor, for example. The control 100 further includes a plurality of switching means 162, 164 for controlling the switching of line voltage 166, 168 to the compressor motor 142 of the compressor 22 (shown in FIG. 1) and to a motor 140 for the condenser fan (shown in FIG. 1). The switching means preferably comprise relays such as an A20500P2 relay manufactured by American Zettler. The condenser fan motor relay 162 and at least one compressor motor relay 164 are also in connection with the controller 160. The control 100 also receives input from a plurality of sensors 172, 174, 176, 178, 180, 188 and 190 for monitoring operating various parameters of the heat pump components. These sensors may include current sensors 172, 174 and 176 for sensing the current level in the start winding and run winding of the compressor motor 142 of the compressor 22 (shown in FIG. 1), and a sensor 178 for sensing the current in the motor 140 of the condenser fan (shown in FIG. 1). Other sensors may include a sensor 180 for sensing the magnitude of the line voltage.

As shown in FIG. 2, the control 100 further includes a plurality of switching means for controlling voltage to a reversing valve 26, for actuating and/or switching the reversing valve 26 between a heat mode and a cool mode, in response to an input signal at terminal 'O' from the thermostat 30. Accordingly, the controller 160 is capable of controlling application of a voltage for switching the reversing valve 26 to a heat or cool mode that corresponds to the selected heating operation or cooling operation of the heat pump 20. However, applying a voltage for switching the reversing valve 26 may be ineffective where a failure of the reversing valve 26 to switch between modes occurs.

As shown in FIG. 2, the control 100 also receives input from a temperature sensor 102 that provides an output indicative of the temperature of the condenser coil 24 (shown in FIG. 1), and may receive an input from a temperature sensor 104 that provides an output indicative of the outside ambient temperature. The control 100 includes a controller 160, which may be a 28 pin PIC16F microprocessor manufactured by Microchip, for example. The microprocessor may include a plurality of Analog to Digital data inputs for receiving information from various data inputs in connection with the control 100, such as sensor 102 that provides an output indicative of a sensed temperature of the condenser coil 24 of the heat pump 20 (shown in FIG. 1). The controller 160 is configured to compare the output of the sensor 102 to a representation of sensed ambient temperature to determine whether the reversing valve 26 is in heat mode where the sensed ambient temperature exceeds the sensed temperature of the condenser coil 24 (shown in FIG. 1), or in cool mode where the sensed ambient temperature is less than the sensed temperature of the condenser coil 24 (shown in FIG. 1). One particular control in which the above may be implemented is the 49H20 Unitary Control manufactured by White-Rodgers, a Division of Emerson Electric Co, which is configured to control activation of at least the compressor motor 142. Accordingly, the control 100 may be a unitary control having a controller 160 for controlling operation of at least the compressor motor 142 of a heat pump in response to a thermostat activation signal.

In the above embodiment, the controller 160 of the control 100 is configured to determine a representation of sensed ambient temperature by obtaining an output of the condenser coil sensor 102 before the compressor 22 is activated, which output is indicative of ambient temperature. This is because when the compressor 22 is not operating, any difference between the temperature of the ambient air and the temperature of the condenser coil 24 will eventually diminish, such that the output of the sensor 102 for sensing condenser coil temperature will be representative of the sensed temperature of the ambient air adjacent the condenser coil 24. The controller 160 is preferably configured to compare, after a predetermined time following activation of the compressor 22, the representation of sensed ambient temperature (obtained from sensor 102 prior to activation) to an output of the sensor 102 that indicative of the sensed temperature of the condenser coil 24 after a minimum period of operation of the compressor 22. Thus, the controller 160 is configured to compare a first output of the sensor 102 before the compressor 22 is activated to a second output of sensor 102 after a predetermined time following activation of the compressor 22, which second output is indicative of the sensed temperature of the condenser coil 24 during operation of the heat pump 20. The controller 160 is configured to determine whether the reversing valve 26 is in heat mode where the sensed ambient temperature exceeds the sensed temperature of the condenser coil 24, or in cool mode where the sensed ambient temperature is less than the sensed temperature of the condenser coil 24. The controller 160 is further configured to deactivate at least the compressor 22 of the heat pump 20 when the reversing valve 26 is determined to be in a mode that is inconsistent with the heat pump's heating operation or cooling operation.

Alternatively, the controller 160 may be configured to determine a representation of sensed ambient temperature by obtaining an output of the second sensor 104 that provides an output indicative of an ambient temperature of air adjacent the condenser coil 24. The controller 160 is configured to compare the output of the second sensor 104 to the output of sensor 102 after a predetermined time following activation of the compressor 22, which is indicative of the sensed temperature of the condenser coil 24 after a predetermined time following activation of the compressor 22. The controller 160 is configured to compare the output of the second sensor 104 to the output of the first sensor 102 to determine whether the reversing valve 26 is in heat mode where the sensed ambient temperature exceeds the sensed temperature of the condenser coil 24, or in cool mode where the sensed ambient temperature is less than the sensed temperature of the condenser coil 24. The controller 160 is further configured to deactivate at least the compressor 22 of the heat pump 20 when the reversing valve 26 is determined to be in a mode that is inconsistent with the heat pump's heating operation or cooling operation.

Accordingly, in the some embodiments of the present disclosure, the control 100 includes a first sensor 102 that provides an output indicative of a sensed temperature of a condenser coil 24 of the heat pump 20, and a second sensor 104 that provides an output indicative of an ambient temperature of air adjacent the condenser coil 24. The control includes a controller 160 for controlling activation of at least a compressor 22 of the heat pump 20. The controller 160 is configured to compare the outputs of the first and second sensors 102, 104 to determine whether the reversing valve 26 is in heat mode where the sensed ambient temperature exceeds the sensed temperature of the condenser coil 24, or in cool mode where the sensed ambient temperature is less than the sensed temperature of the condenser coil 24. The controller 160 is further configured to deactivate at least the compressor 22 of the heat pump 20 when the reversing valve 26 is determined to be in a mode that is inconsistent with the heating operation or cooling operation of the heat pump 20.

In an alternate embodiment, the control 100 may not directly control the compressor 22 of heat pump 20. Instead, the control 100 includes a controller that wirelessly communicates with the thermostat 30. The controller compares a representation of sensed ambient temperature to the output of the sensor 102 that is indicative of a temperature of the condenser coil 24 to determine whether the reversing valve 26 is in heat mode where the ambient temperature exceeds the sensed temperature of the condenser coil 24, or in cool mode where the ambient temperature is less than the sensed temperature of the condenser coil 24, and responsively transmits a wireless signal to a thermostat 30 indicating a valve malfunction when the reversing valve 26 is determined to be in a mode that is inconsistent with the heat pump's heating operation or cooling operation. The thermostat 30 would then be able to shut off the heat pump 20 and alert an occupant of the malfunction of the reversing valve 26.

In yet another alternate embodiment, the control 100 may be a thermostat 30 that is in wireless communication with at least a first sensor 102 that provides an output indicative of sensed temperature of the condenser coil 24. The first sensor 102 preferably provides an output indicative of sensed temperature of the condenser coil 24 to a communication control (control 100 shown in FIG. 1), which is configured to wireless transmit information indicative of sensed temperature of the condenser coil 24 to the thermostat 30. The thermostat 30 is configured to compare a first output of the sensor 102 before the compressor 22 is activated (which is representative of ambient temperature) to a second output of sensor 102 after a predetermined time following activation of the compressor 22 to determine whether the reversing valve 26 is in heat mode where the sensed ambient temperature exceeds the sensed temperature of the condenser coil 24, or in cool mode where the sensed ambient temperature is less than the sensed temperature of the condenser coil 24. The thermostat 30 is further configured to deactivate at least the compressor 22 of the heat pump 20 when the reversing valve 26 is determined to be in a mode that is inconsistent with the heating operation or cooling operation of the heat pump 20.

Alternatively, the thermostat 30 may be in wireless communication with at least the first sensor 102 that provides an output indicative of sensed temperature of the condenser coil 24, and a second sensor 104 that provides an output indicative of ambient air temperature. The first sensor 102 and second sensor 104 preferably provide an output to a communication control (control 100 shown in FIG. 1), which is configured to wireless transmit information indicative of ambient temperature and the temperature of the condenser coil 24 to the thermostat 30. The thermostat 30 is configured to compare the outputs of the first sensor 102 and second sensor 104 after a predetermined time following activation of the compressor 22, to determine whether the reversing valve 26 is in heat mode where the sensed ambient temperature exceeds the sensed temperature of the condenser coil 24, or in cool mode where the sensed ambient temperature is less than the sensed temperature of the condenser coil 24. The thermostat 30 is further configured to deactivate at least the compressor 22 of the heat pump 20 when the reversing valve 26 is determined to be in a mode that is inconsistent with the heating operation or cooling operation of the heat pump 20. Accordingly, it should be understood that the above control system for controlling a heat pump 20 having a reversing valve 26 may be employed in a number of configurations in different control devices.

Aspects of the present disclosure relate to reversing valves used in vapor-compression heat pump systems. Exemplary embodiments are disclosed of methods and controls operable for detecting a stuck reversing valve in either, cool mode, heat mode, or defrost mode for such a system. An exemplary embodiment includes using the coil temperature and ambient temperature sensors on a control (e.g., unitary control, etc.) to detect a stuck reversing valve based on the operating mode and temperature differential between the 2 inputs.

In an exemplary embodiment, a method includes using the coil temperature as compared to the ambient temperature to determine what position the reversing valve is in relative to the requested mode. In some embodiments, this may accomplished by adding software (*e.g*., software routine, algorithms, etc.) to a unitary control, and using inputs from the coil and ambient sensors which are part of the unitary control. The method may include measuring the temperature of the outdoor coil and comparing the measurement to the ambient temperature, which will tell the control what position the reversing valve is in. If the reversing valve is in position A, the temperature of the outdoor coil will be at a higher temperature than the ambient temperature because the outdoor coil is dissipating heat in air conditioning mode. If the reversing valve is in position B, the temperature of the outdoor coil will be at a lower temperature than the ambient temperature because the outdoor coil is absorbing heat in heating mode. The heat pump may be allowed to run for a period of time in order for the system to reach steady state, so as to inhibit the control from making an incorrect decision on the reversing valve status. If the relative temperature relationships for positions A or B are not recognized, the control may then shut the system down and issue a fault. In some embodiments, this method may be used during installation to determine if a heat pump system has been incorrectly installed. Advantageously, diagnosis of a failed reversing valve may prevent or inhibit the heat pump from opening in the wrong mode of operation, such as heating a home when cooling is required.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail. In addition, advantages and improvements that may be achieved with one or more exemplary embodiments of the present disclosure are provided for purpose of illustration only and do not limit the scope of the present disclosure, as exemplary embodiments disclosed herein may provide all or none of the above mentioned advantages and improvements and still fall within the scope of the present disclosure as defined by the claims.

Specific dimensions, specific materials, and/or specific shapes disclosed herein are example in nature and do not limit the scope of the present disclosure. The disclosure herein of particular values and particular ranges of values for given parameters are not exclusive of other values and ranges of values that may be useful in one or more of the examples disclosed herein. Moreover, it is envisioned that any two particular values for a specific parameter stated herein may define the endpoints of a range of values that may be suitable for the given parameter (*i*.*e*., the disclosure of a first value and a second value for a given parameter can be interpreted as disclosing that any value between the first and second values could also be employed for the given parameter). Similarly, it is envisioned that disclosure of two or more ranges of values for a parameter (whether such ranges are nested, overlapping or distinct) subsume all possible combination of ranges for the value that might be claimed using endpoints of the disclosed ranges.

The terminology used herein is for the purpose of describing particular example embodiments only and is not intended to be limiting. As used herein, the singular forms "a", "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on", "engaged to", "connected to" or "coupled to" another element or layer, it may be directly on, engaged, connected or coupled to the other element or layer, or intervening elements or layers may be present. In contrast, when an element is referred to as being "directly on," "directly engaged to", "directly connected to" or "directly coupled to" another element or layer, there may be no intervening elements or layers present. Other words used to describe the relationship between elements should be interpreted in a like fashion (*e*.*g*., "between" versus "directly between," "adjacent" versus "directly adjacent," etc.). As used herein, the term "and/or" includes any and all combinations of one or more of the associated listed items. The term "about" when applied to values indicates that the calculation or the measurement allows some slight imprecision in the value (with some approach to exactness in the value; approximately or reasonably close to the value; nearly). If, for some reason, the imprecision provided by "about" is not otherwise understood in the art with this ordinary meaning, then "about" as used herein indicates at least variations that may arise from ordinary methods of measuring or using such parameters. For example, the terms "generally", "about", and "substantially" may be used herein to mean within manufacturing tolerances.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath", "below", "lower", "above", "upper" and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The foregoing description of the embodiments has been provided for purposes of illustration and description. It is not intended to be exhaustive or to limit the disclosure. Individual elements, intended or stated uses, or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure which are defined by the claims.

## Claims

1. A control (100) for a heat pump (20) having a reversing valve (26) that is switchable between a heat mode and a cool mode corresponding to heating operation and cooling operation of the heat pump (20),
**characterized in that**
the control (100) comprises:
a sensor (102) that provides an output representative of a sensed ambient temperature at a first time and a sensed temperature of a condenser coil (24) of the heat pump (20) at a second time; and
a controller (160) for controlling activation of at least a compressor (22) of the heat pump (20), the controller (160) being configured to compare the sensed temperature of the condenser coil (24) to the representation of sensed ambient temperature to determine whether the reversing valve is in heat mode where the representation of sensed ambient temperature exceeds the sensed temperature of the condenser coil (24), or in cool mode where the representation of sensed ambient temperature is less than the sensed temperature of the condenser coil (24), wherein the controller (160) is configured to cause deactivation of at least the compressor of the heat pump when the reversing valve is determined to be in a mode that is inconsistent with the heat pump's heating operation or cooling operation,
wherein the representation of sensed ambient temperature is obtained from the output of the sensor (102) at the first time before the compressor (22) is activated, which output is indicative of ambient temperature, and
wherein the controller (160) is configured to compare the representation of sensed ambient temperature to the output of the sensor (102) at the second time, which is after a predetermined time following activation of the compressor (22), and is indicative of the sensed temperature of the condenser coil (24) after a minimum period of operation.

2. The control (100) of any one of the preceding claims, wherein the controller (160) is configured to compare a first output of the sensor (102) before the compressor is activated, which is representative of ambient temperature, to a second output of the sensor (102) after a predetermined time following activation of the compressor, which second output is indicative of the sensed temperature of the condenser coil to determine whether the reversing valve (26) is in a heat mode or a cool mode.

3. The control (100) of any one of the preceding claims, wherein the second representation of sensed ambient temperature is obtained from a second sensor (104) that provides an output indicative of an ambient temperature of air adjacent the condenser coil (24).

4. The control (100) of claim 3, wherein the controller (160) is configured to compare the second representation of sensed ambient temperature obtained from the second sensor (104) to the sensed temperature of the condenser coil (24) after a predetermined time following activation of the compressor (22).

5. The control (100) of any one of the preceding claims, wherein the controller (160) is configured to compare a first output of the sensor (102) indicative of a first sensed temperature of the condenser coil (24) before the compressor (22) is activated to a second output of the sensor (102) indicative of a second sensed temperature of the condenser coil (24) after the compressor (22) is activated to determine whether the reversing valve (26) is in heat mode where the first sensed temperature of the condenser (24) coil exceeds the second sensed temperature of the condenser coil (24), or in cool mode where the first sensed temperature of the condenser coil (24) is less than the second sensed temperature of the condenser coil (24).

6. The control (100) of claim 5, wherein the first output of the sensor (102) that is obtained before the compressor is activated is a representation of sensed ambient temperature of air adjacent the condenser coil.

7. The control (100) of claim 5 or 6, wherein the controller (160) is configured to obtain the second output of the sensor (102) after a predetermined time following activation of the compressor (22).

8. The control (100) of any one of claims 1 to 2 or 5 to 7, wherein:
the sensor comprises a first sensor (102) that provides an output indicative of a sensed temperature of a condenser coil (24) of the heat pump (20);
the control (100) further comprises a second sensor (104) that provides an output indicative of a sensed ambient temperature of air adjacent the condenser coil (24); and
the controller (160) is configured to compare the outputs of the first and second sensors (102, 104) to determine whether the reversing valve (26) is in heat mode where the ambient temperature sensed by the second sensor (104) exceeds the sensed temperature of the condenser coil (24), or in cool mode where the ambient temperature sensed by the second sensor (104) is less than the sensed temperature of the condenser coil (24).

9. The control (100) of claim 8, wherein the controller (160) is configured to compare the output of the second sensor (104) to the output of the first sensor (102) indicative of the sensed temperature of the condenser coil (24) after a predetermined time following activation of the compressor (22).

10. The control (100) of any one of the preceding claims, wherein the controller (160) is a processor of a unitary control for controlling operation of at least the compressor (22) of the heat pump (20) in response to an activation signal from a thermostat 30.

11. The control (100) of any one of the preceding claims, wherein the control (100) is a communication control for communicating a malfunction of the reversing valve (26) to a thermostat (30) when the reversing valve (26) is determined to be in a mode that is inconsistent with the heat pump's (20) heating operation or cooling operation, wherein the thermostat (30) responsively switches off the compressor (22) to cause deactivation of at least the compressor (22) of the heat pump (20).

12. The control (100) of any one of the preceding claims, wherein the controller (160) is a processor of a thermostat (30) that is configured to wirelessly receive information indicative of the temperature of the condenser coil (24) and of ambient temperature, the thermostat (30) being configured to determine whether the reversing valve (22) is in heat mode where the representation of sensed ambient temperature exceeds the sensed temperature of the condenser coil (24), or in cool mode where representation of sensed ambient temperature is less than the sensed temperature of the condenser coil (24), and to cause deactivation of at least the compressor (22) of the heat pump (20) when the reversing valve (22) is determined to be in a mode that is inconsistent with the heat pump's (20) heating operation or cooling operation.

## Patentansprüche

1. Steuerung (100) für eine Wärmepumpe (20), die ein Umschaltventil (26) aufweist, welches zwischen einem Heizmodus und einem Kühlmodus umschaltbar ist, die einem Heizbetrieb und einem Kühlbetrieb der Wärmepumpe (20) entsprechen,
**dadurch gekennzeichnet, dass**
die Steuerung (100) umfasst:
einen Sensor (102), welcher einen Ausgang liefert, der für eine erfasste Umgebungstemperatur zu einem ersten Zeitpunkt und eine erfasste Temperatur einer Kondensatorspule (24) der Wärmepumpe (20) zu einem zweiten Zeitpunkt repräsentativ ist; und
eine Steuereinrichtung (160) zum Steuern der Aktivierung wenigstens eines Kompressors (22) der Wärmepumpe (20), wobei die Steuereinrichtung (160) dafür ausgelegt ist, die erfasste Temperatur der Kondensatorspule (24) mit der Repräsentation einer erfassten Umgebungstemperatur zu vergleichen, um zu bestimmen, ob sich das Umschaltventil im Heizmodus befindet, wobei die Repräsentation einer erfassten Umgebungstemperatur die erfasste Temperatur der Kondensatorspule (24) übersteigt, oder im Kühlmodus, wobei die Repräsentation einer erfassten Umgebungstemperatur kleiner als die erfasste Temperatur der Kondensatorspule (24) ist, wobei die Steuereinrichtung (160) dafür ausgelegt ist, eine Deaktivierung wenigstens des Kompressors der Wärmepumpe zu bewirken, wenn bestimmt wird, dass sich das Umschaltventil in einem Modus befindet, welcher nicht mit dem Heizbetrieb oder Kühlbetrieb der Wärmepumpe konsistent ist,
wobei die Repräsentation einer erfassten Umgebungstemperatur aus dem Ausgang des Sensors (102) zu dem ersten Zeitpunkt gewonnen wird, bevor der Kompressor (22) aktiviert wird, wobei dieser Ausgang für die Umgebungstemperatur indikativ ist, und
wobei die Steuereinrichtung (160) dafür ausgelegt ist, die Repräsentation einer erfassten Umgebungstemperatur mit dem Ausgang des Sensors (102) zum zweiten Zeitpunkt, welcher eine vorgegebene Zeit nach der Aktivierung des Kompressors (22) liegt, zu vergleichen, der für die erfasste Temperatur der Kondensatorspule (24) nach einer minimalen Betriebsdauer indikativ ist.

2. Steuerung (100) nach einem der vorhergehenden Ansprüche, wobei die Steuereinrichtung (160) dafür ausgelegt ist, einen ersten Ausgang des Sensors (102), bevor der Kompressor aktiviert wird, welcher für die Umgebungstemperatur repräsentativ ist, mit einem zweiten Ausgang des Sensors (102) nach einer vorgegebenen Zeit im Anschluss an die Aktivierung des Kompressors zu vergleichen, wobei dieser zweite Ausgang für die erfasste Temperatur der Kondensatorspule indikativ ist, um zu bestimmen, ob sich das Umschaltventil (26) in einem Heizmodus oder einem Kühlmodus befindet.

3. Steuerung (100) nach einem der vorhergehenden Ansprüche, wobei die zweite Repräsentation einer erfassten Umgebungstemperatur von einem zweiten Sensor (104) gewonnen wird, welcher einen Ausgang liefert, der für eine Umgebungstemperatur von Luft in der Nähe der Kondensatorspule (24) indikativ ist.

4. Steuerung (100) nach Anspruch 3, wobei die Steuereinrichtung (160) dafür ausgelegt ist, die zweite Repräsentation einer erfassten Umgebungstemperatur, die von dem zweiten Sensor (104) gewonnen wird, mit der erfassten Temperatur der Kondensatorspule (24) nach einer vorgegebenen Zeit im Anschluss an die Aktivierung des Kompressors (22) zu vergleichen.

5. Steuerung (100) nach einem der vorhergehenden Ansprüche, wobei die Steuereinrichtung (160) dafür ausgelegt ist, einen ersten Ausgang des Sensors (102), der für eine erste erfasste Temperatur der Kondensatorspule (24), bevor der Kompressor (22) aktiviert wird, indikativ ist, mit einem zweiten Ausgang des Sensors (102) zu vergleichen, der für eine zweite erfasste Temperatur der Kondensatorspule (24), nachdem der Kompressor (22) aktiviert wurde, indikativ ist, um zu bestimmen, ob sich das Umschaltventil (26) im Heizmodus befindet, wobei die erste erfasste Temperatur der Kondensatorspule (24) die zweite erfasste Temperatur der Kondensatorspule (24) übersteigt, oder in einem Kühlmodus, wobei die erste erfasste Temperatur der Kondensatorspule (24) kleiner als die zweite erfasste Temperatur der Kondensatorspule (24) ist.

6. Steuerung (100) nach Anspruch 5, wobei der erste Ausgang des Sensors (102), welcher erhalten wird, bevor der Kompressor aktiviert wird, eine Repräsentation einer erfassten Umgebungstemperatur von Luft in der Nähe der Kondensatorspule ist.

7. Steuerung (100) nach Anspruch 5 oder 6, wobei die Steuereinrichtung (160) dafür ausgelegt ist, den zweiten Ausgang des Sensors (102) nach einer vorgegebenen Zeit im Anschluss an die Aktivierung des Kompressors (22) zu gewinnen.

8. Steuerung (100) nach einem der Ansprüche 1 bis 2 oder 5 bis 7, wobei:
der Sensor einen ersten Sensor (102) umfasst, welcher einen Ausgang liefert, der für eine erfasste Temperatur einer Kondensatorspule (24) der Wärmepumpe (20) indikativ ist;
die Steuerung (100) ferner einen zweiten Sensor (104) umfasst, welcher einen Ausgang liefert, der für eine erfasste Umgebungstemperatur von Luft in der Nähe der Kondensatorspule (24) indikativ ist; und
die Steuereinrichtung (160) dafür ausgelegt ist, die Ausgänge des ersten und des zweiten Sensors (102, 104) zu vergleichen, um zu bestimmen, ob sich das Umschaltventil (26) im Heizmodus befindet, wobei die von dem zweiten Sensor (104) erfasste Umgebungstemperatur die erfasste Temperatur der Kondensatorspule (24) übersteigt, oder im Kühlmodus, wobei die von dem zweiten Sensor (104) erfasste Umgebungstemperatur kleiner als die erfasste Temperatur der Kondensatorspule (24) ist.

9. Steuerung (100) nach Anspruch 8, wobei die Steuereinrichtung (160) dafür ausgelegt ist, den Ausgang des zweiten Sensors (104) mit dem Ausgang des ersten Sensors (102) zu vergleichen, der für die erfasste Temperatur der Kondensatorspule (24) nach einer vorgegebenen Zeit im Anschluss an die Aktivierung des Kompressors (22) indikativ ist.

10. Steuerung (100) nach einem der vorhergehenden Ansprüche, wobei die Steuereinrichtung (160) ein Prozessor einer Einzelsteuerung zum Steuern des Betriebs wenigstens des Kompressors (22) der Wärmepumpe (20) in Reaktion auf ein Aktivierungssignal von einem Thermostaten (30) ist.

11. Steuerung (100) nach einem der vorhergehenden Ansprüche, wobei die Steuerung (100) eine Kommunikationssteuerung zum Übermitteln einer Funktionsstörung des Umschaltventils (26) an einen Thermostaten (30) ist, wenn bestimmt wird, dass sich das Umschaltventil (26) in einem Modus befindet, welcher nicht mit dem Heizbetrieb oder Kühlbetrieb der Wärmepumpe (20) konsistent ist, wobei der Thermostat (30) in Reaktion darauf den Kompressor (22) ausschaltet, um eine Deaktivierung wenigstens des Kompressors (22) der Wärmepumpe (20) zu bewirken.

12. Steuerung (100) nach einem der vorhergehenden Ansprüche, wobei die Steuereinrichtung (160) ein Prozessor eines Thermostaten (30) ist, welcher dafür ausgelegt ist, drahtlos Informationen zu empfangen, die für die Temperatur der Kondensatorspule (24) und für eine Umgebungstemperatur indikativ sind, wobei der Thermostat (30) dafür ausgelegt ist zu bestimmen, ob sich das Umschaltventil (22) im Heizmodus befindet, wobei die Repräsentation einer erfassten Umgebungstemperatur die erfasste Temperatur der Kondensatorspule (24) übersteigt, oder im Kühlmodus, wobei die Repräsentation einer erfassten Umgebungstemperatur kleiner als die erfasste Temperatur der Kondensatorspule (24) ist, und eine Deaktivierung wenigstens des Kompressors (22) der Wärmepumpe (20) zu bewirken, wenn bestimmt wird, dass sich das Umschaltventil (22) in einem Modus befindet, welcher nicht mit dem Heizbetrieb oder Kühlbetrieb der Wärmepumpe (20) konsistent ist.

## Revendications

1. Unité de commande (100) pour une pompe à chaleur (20) ayant une vanne d'inversion (26) qui peut être commutée entre un mode de chauffage et un mode de refroidissement correspondant au fonctionnement de chauffage et au fonctionnement de refroidissement de la pompe à chaleur (20),
**caractérisé en ce que**
l'unité de commande (100) comprend :
un capteur (102) qui fournit une sortie représentative d'une température ambiante détectée à un premier moment et une température détectée d'une bobine de condensateur (24) de la pompe à chaleur (20) à un second moment ; et
un contrôleur (160) pour commander l'activation d'au moins un compresseur (22) de la pompe à chaleur (20), le contrôleur (160) étant configuré pour comparer la température détectée de la bobine de condensateur (24) avec la représentation de la température ambiante détectée pour déterminer si la vanne d'inversion est dans un mode de chauffage où la représentation de la température ambiante détectée excède la température détectée de la bobine de condensateur (24), ou dans un mode de refroidissement où la représentation de la température ambiante détectée est inférieure à la température détectée de la bobine de condensateur (24), dans lequel le contrôleur (160) est configuré pour causer la désactivation au d'au moins le compresseur de la pompe à chaleur lorsque la vanne d'inversion est déterminée se trouver dans un mode qui n'est pas cohérent avec le fonctionnement de chauffage de fonctionnement de refroidissement de la pompe à chaleur,
dans lequel la représentation de la température ambiante détectée est obtenue d'après la sortie du capteur (102) au premier moment avant que le compresseur (22) soit activé, laquelle sortie indique une température ambiante et
dans lequel le contrôleur (160) est configuré pour comparer la représentation de la température ambiante détectée avec la sortie du capteur (102) au second moment, qui se trouve après un temps prédéterminé suivant l'activation du compresseur (22) et indique la température détectée de la bobine de condensateur (24) après une période de fonctionnement minimale.

2. Unité de commande (100) selon une quelconque des revendications précédentes, dans laquelle le contrôleur (160) est configuré pour comparer une première sortie du capteur (102) avant que le compresseur soit activé, qui est représentative d'une température ambiante, avec une seconde sortie du capteur (102) après un temps prédéterminé suivant l'activation du compresseur, laquelle seconde sortie indique la température détectée de la bobine de condensateur afin de déterminer si la vanne d'inversion (26) se trouve dans un mode de chauffage ou dans un mode de refroidissement.

3. Unité de commande (100) selon une quelconque des revendications précédentes, dans laquelle la seconde représentation de température ambiante détectée est obtenue d'après un second capteur (104) qui fournit une sortie indiquant une température ambiante de l'air à proximité de la bobine de condensateur (24).

4. Unité de commande (100) selon la revendication 3, dans laquelle le contrôleur (160) est configuré pour comparer la seconde représentation de température ambiante détectée obtenue à partir du second capteur (104) avec la température détectée de la bobine de condensateur (24) après un temps prédéterminé suivant l'activation du compresseur (22).

5. Unité de commande (100) selon une quelconque des revendications précédentes, dans laquelle le contrôleur (160) est configuré pour comparer une première sortie du capteur (102) indiquant une première température détectée de la bobine de condensateur (24) avant que le compresseur (22) soit activé avec une seconde sortie du capteur (102) indiquant une seconde température détectée de la bobine de condensateur (24) après que le compresseur (22) est activé pour déterminer si la vanne d'inversion (26) se trouve en mode de chauffage ou la première température détectée de la bobine de condensateur (24) excède la seconde température détectée de la bobine de condensateur (24), ou dans un mode de refroidissement où la première température détectée de la bobine condensateur (24) est inférieure à la seconde température détectée de la bobine de condensateur (24).

6. Unité de commande (100) selon la revendication 5, dans laquelle la première sortie du capteur (102) qui est obtenue avant que le compresseur soit activé est une représentation de température ambiante détectée de l'air à proximité de la bobine de condensateur.

7. Unité de commande (100) selon la revendication 5 ou 6, dans laquelle le contrôleur (160) et configuré pour obtenir la seconde sortie du capteur (102) après un temps prédéterminé suivant l'activation du compresseur (22).

8. Unité de commande (100) selon une quelconque des revendications 1 à 2 ou 5 à 7, dans laquelle :
le capteur comprend un premier capteur (102) qui fournit une sortie indiquant une température détectée d'une bobine de condensateur (24) de la pompe à chaleur (20) ;
l'unité de commande (100) comprend en outre un second capteur (104) qui fournit une sortie indiquant une température ambiante détectée de l'air à proximité de la bobine de condensateur (24) ; et
le contrôleur (160) est configuré pour comparer les sorties du premier et du second capteur (102,104) pour déterminer si la vanne d'inversion (26) se trouve dans un mode de chauffage ou la température ambiante détectée par le second capteur (104) excède la température détectée de la bobine de condensateur (24) ou dans un mode de refroidissement où la température ambiante détectée par le second capteur (104) est inférieure à la température détectée de la bobine de condensateur (24).

9. Unité de commande (100) selon la revendication 8, dans laquelle le contrôleur (160) est configuré pour comparer la sortie du second capteur (104) avec la sortie du premier capteur (102) indiquant la température détectée de la bobine de condensateur (24) après un temps prédéterminé suivant l'activation du compresseur (22).

10. Unité de commande (100) selon une quelconque des revendications précédentes, dans laquelle le contrôleur (160) est un processeur d'une unité de commande unitaire pour commander le fonctionnement d'au moins le compresseur (22) de la pompe à chaleur (20) en réponse à un signal d'activation provenant d'un thermostat (30).

11. Unité de commande (100) selon une quelconque des revendications précédentes, dans laquelle l'unité de commande (100) est une unité de commande de communication pour communiquer un dysfonctionnement de la vanne d'inversion (26) à un thermostat (30) lorsque la vanne d'inversion (26) est déterminée se trouver dans un mode qui n'est pas cohérent avec le fonctionnement de chauffage ou le fonctionnement de refroidissement de la pompe à chaleur (20), dans lequel le thermostat (30) éteint en réponse le compresseur (22) afin de causer la désactivation d'au moins le compresseur (22) de la pompe à chaleur (20).

12. Unité de commande (100) selon une quelconque des revendications précédentes, dans laquelle le contrôleur (160) est un processeur d'un thermostat (30) qui est configuré pour recevoir sans fil une information indiquant la température de la bobine de condensateur (24) et la température ambiante, le thermostat (30) étant configurée pour déterminer si la vanne d'inversion (22) se trouve dans un mode de chauffage où la représentation de la température ambiante détectée excède la température détectée de la bobine de condensateur (24), ou dans un mode de refroidissement où la représentation de la température ambiante détectée est inférieure à la température détectée de la bobine de condensateur (24), et pour causer la désactivation d'au moins le compresseur (22) de la pompe à chaleur (20) lorsque la vanne d'inversion (22) est déterminée se trouver dans un mode qui n'est pas cohérent avec le fonctionnement de chauffage ou le fonctionnement de refroidissement de la pompe à chaleur (20).
